# NEUE EUROPÄISCHE PATENTSCHRIFT

(11) **EP 1 963 210 B2**
(45) Veröffentlichungstag und Bekanntmachung des Hinweises auf die Entscheidung über den Einspruch: **25.05.2016**
(45) Hinweis auf die Patenterteilung: 05.05.2010
(21) Anmeldenummer: 06763015.2
(22) Anmeldetag: 08.08.2006
(51) Int. Cl.: B65G 1/00, B65G 69/00, G01V 8/20

(54) **SENSORVORRICHTUNG ZUR DETEKTION EINES ÜBERHANGS AN DER BELADUNG EINER TRÄGEREINRICHTUNG**
SENSOR APPARATUS FOR DETECTING AN OVERHANG ON THE LOAD OF A CARRIER DEVICE
DISPOSITIF CAPTEUR POUR LA DETECTION D'UN SURPLOMB FORME PAR LE CHARGEMENT D'UN DISPOSITIF DE SUPPORT

(30) Priorität: 09.08.2005 DE 102005038019
(43) Veröffentlichungstag der Anmeldung: 03.09.2008
(73) Patentinhaber: Rockwell Automation Safety AG, 7302 Landquart (CH)
(72) Erfinder: LUTZ, Eric, 7324 Vilters (CH)
(74) Vertreter: Grünecker Patent- und Rechtsanwälte PartG mbB
(86) Internationale Anmeldenummer: PCT/EP2006/007825
(87) Internationale Veröffentlichungsnummer: WO 2007/017241

(56) Entgegenhaltungen:
- EP-A1- 0 594 869
- EP-A2- 0 964 273
- WO-A-93/23318
- DD-A1- 119 999
- DE-A1- 3 732 842
- DE-A1- 10 212 382
- DE-A1- 10 329 881
- DE-A1- 19 946 476
- DE-C3- 2 236 424
- DE-U1- 9 114 867
- JP-A- 2002 338 031
- US-A1- 2003 065 421
- US-A1- 2003 146 373

## Beschreibung

Die Erfindung betrifft eine Sensorvorrichtung zur Detektion eines Überhangs an der Beladung einer Trägereinrichtung nach dem Oberbegriff des Anspruchs 1.

### Stand der Technik

Wenn Material auf einem Transportsystem bewegt wird, ist es häufig erforderlich, sicherzustellen, dass das Material über keine Vorderkante und gegebenenfalls auch über keine Hinterkante einer Transportstruktur überhängt bzw. ausladet. Ein Überhang kann in einem automatischen Lagersystem ernste Probleme bereiten. Wenn beispielsweise bei einer Palette ein Überhang vorhanden ist, und diese zu einer Lagerposition transportiert wird, kann aufgrund des Überhangs die Palette mit der Beladung nicht in den Lagerplatz passen. Es kann auch aufgrund des Überhangs eine Kollision mit Strukturen des Lagersystems stattfinden. Derartige Situationen gilt es zu vermeiden, da dadurch die Produktivität leidet und eine Beschädigung der Beladung, aber auch des Lager- oder Transportsystems auftreten kann.

In einer bekannten Ausführungsform wird zum Beispiel eine Palette in einer vordefinierten Position angehalten oder es wird ein Sensor eingesetzt, mit dem die Palette detektierbar ist, um dann deren Bewegung anzuhalten. Etwas entfernt von der Vorderkante der Palette ist ein Lichtvorhang mit Lichtschranken vorgesehen. Wenn der Ausgang des Lichtvorhangs eine Unterbrechung der Lichtschranken anzeigt, dann steht ein Materialüberhang über die Vorderkante der Palette heraus. Der Ausgang des Lichtvorhangs kann dann genutzt werden, um die Palette aus dem Einlagerungsvorgang herauszunehmen oder einen Hinweis auf das Problem an das Bedienpersonal auszugeben.

Eine entsprechende Vorgehensweise kann nicht nur für die Vorderkante einer Palette, sondern auch für deren Hinterkante eingesetzt werden. Wenn die Palette so angeordnet wird, dass der Lichtvorhang gerade hinter der Hinterkante der Palette angeordnet ist, kann mit dem Lichtvorhang festgestellt werden, ob etwas über die Hinterkante der Palette überhängt.

Bei einer Ausführungsform wird nur, wenn beide Tests abgeschlossen sind und jeweils keine Unterbrechung des Lichtvorhangs auftrat, der Einlagerungsvorgang fortgesetzt.

Die Prüfung auf Vorhandensein eines Übergangs erfordert dementsprechend eine gewisse Zeit, durch welche der Einlagerungsvorgang verlängert wird.

DD 119 999 zeigt eine Einrichtung zum Prüfen der Stirnseiten von Paletten im automatischen Lagerbetrieb. Vorgeschlagen ist, dass zur zeitlich begrenzten Aktivierung von prüfenden Lichtschranken, die vertikal an einem Prüfrahmen angeordnet sind, zwei horizontale, Impulse auslösende und mittels einer Anlaßschaltung miteinander verknüpfte Lichtschranken vorgesehen sind.

### Aufgabe und Vorteile der Erfindung

Der Erfindung liegt die Aufgabe zugrunde, eine Sensorvorrichtung zur Detektion eines Überhangs bereitzustellen, die vergleichsweise effektiver arbeitet.

Diese Aufgabe wird durch die Merkmale des Anspruchs 1 gelöst.

In den abhängigen Ansprüchen sind vorteilhafte und zweckmäßige Ausgestaltungen der Erfindung aufgezeigt.

Die Erfindung geht von einer Sensorvorrichtung zur Detektion eines Überhangs an der Beladung einer Trägereinrichtung, zum Beispiel einer Palette aus, die eine Sensoranordnung mit wenigstens einem Sender und einem Empfänger sowie eine Elektronikeinheit zur Steuerung von Sender und Empfänger umfasst.

Gemäß der Erfindung erfasst die Sensoranordnung zwei Bereiche der Trägereinrichtung mit Beladung während einer Bewegung der Trägereinrichtung derart, dass eine Bewertung der geometrischen Position der Bereiche zueinander ermöglicht ist, wobei der erste Bereich die Trägereinrichtung und der zweite Bereich die Beladung betrifft, und dass die Elektronikeinheit dazu ausgelegt ist für jeden Bereich ein Signal zu erzeugen und die Signale zu verknüpfen, so dass daraus auf einen Überhang geschlossen werden kann.

Dieser Vorgehensweise liegt zunächst der Gedanke zugrunde, das die für die Bestimmung des Überhangs notwendigen Signale während der Bewegung der Palette erfasst werden. Dadurch entsteht durch die "Überhangdetektion" kein Zeitverlust. Zentraler Punkt der erfindungsgemäßen Vorgehensweise ist weiter die Konzentration der sensorischen Erfassung von zwei Bereichen, nämlich dem Bereich der Trägereinrichtung und dem Bereich der Beladung. Die Auswertung kann sich damit im einfachsten Fall auf zwei Signale für die beiden Bereiche beschränken, womit sich die Elektronikeinheit vergleichsweise einfach ausgestalten lässt.

Gemäß der Erfindung ist die Elektronikeinheit dazu ausgelegt, für jeden Bereich ein einziges Signal zu erzeugen und auf einen Überhang durch eine logische Verknüpfung zu schließen, wenn für den ersten Bereich ein Signal generiert ist, dass keine Trägereinrichtung wiederspiegelt und für den zweiten Bereich ein Signal generiert ist, dass eine Beladung wiederspiegelt. Wird beispielsweise an einer Stelle, die einer Ebene senkrecht zur Bewegungsrichtung der Trägereinrichtung entspricht, eine Beladung, aber keine Trägereinrichtung detektiert, muss ein Überhang an der Beladung über die Trägereinrichtung in Bewegungsrichtung vorhanden sein.

Gemäß der Erfindung umfasst die Sensoranordnung eine Lichtschrankenanordnung mit mehreren Lichtschranken, wobei die Lichtschranken dem ersten und zweiten Bereich zugeordnet sind, so dass wenigstens eine Lichtschranke im ersten Bereich für die Detektion einer Trägereinrichtung und wenigstens eine Lichtschranke im zweiten Bereich für die Detektion einer Beladung vorgesehen ist. Vorzugsweise sind mehrere Lichtschranken für insbesondere den Bereich der Beladung, gegebenenfalls auch für den Bereich der Trägereinrichtung vorhanden.

Um zu vermeiden, dass fälschlicherweise ein Überhang detektiert wird, weil zum Beispiel an der Trägereinrichtung in Form einer Palette eine Lichtschranke an einer Stelle positioniert ist, an welcher die Palette konstruktionsbedingt oder durch Beschädigung in einer Detektionsrichtung z. B. einer Richtung quer zur Bewegungsrichtung offen ist, so dass eine entsprechend angeordnete Lichtschranke nicht unterbrochen wird, kann man wie folgt vorgehen:

Wenigstens eine Lichtschranke ist auf einer Höhe der Trägereinrichtung angeordnet, in welcher sich z. B. eine durchgehende Deckschicht für die Bereitstellung einer Trägereinrichtungsauflage befindet. Dadurch wird vermieden, dass beispielsweise in einem Fuß-oder Sockelbereich der Trägereinrichtung, z. B. einer Palette, mit einer Lichtschranke gemessen wird, wo an unterschiedlichen Stellen ein freier Durchgang auftritt.

Damit jedoch vorstehende Teile der Beladung, die eine geringere Dicke aufweisen, wie der Abstand der Lichtschranken oder Elemente der Trägereinrichtung, die ebenfalls eine geringere Dicke aufweisen als der Abstand zwischen den jeweiligen Lichtschranken sicher erfasst werden können, ist im zweiten Bereich zumindest eine Lichtschranke vorzusehen, die in Bezug auf eine Trägereinrichtungsauflage schräg, das heißt mit einem Winkel zu einer entsprechenden Auflageebene, verläuft.

Im Weiteren ist es vorteilhaft, wenn mittels der Elektronikeinheit aus einer Zeitdifferenz zwischen einem Signal des ersten Bereichs und einem Signal des zweiten Bereichs unter Hinzuziehung einer Bewegungsgeschwindigkeit der Trägereinrichtung das Vorhandensein oder Nichtvorhandensein eines Überhangs ermittelbar ist. Aus Zeitdifferenz und Geschwindigkeit lässt sich der Überhang vergleichsweise exakt bestimmen, so dass eine Differenzierung zwischen einem noch erlaubten und einem nicht erlaubten Überhang möglich ist. Eine entsprechende Auswertung von Signalen muss nicht unmittelbar zum Zeitpunkt der Erfassung der Signale erfolgen, sondern kann auch noch zu einem späteren Zeitpunkt durchgeführt werden. Denn häufig ist es für die Detektion eines Überhangs unerheblich, ob die Trägereinrichtung, zum Beispiel eine Palette, wenn ein Überhang vorhanden ist, einige Zentimeter oder sogar Meter nach zum Beispiel einem Lichtvorhang aus Lichtschranken gestoppt wird, wenn sich der Überhang aus der Auswertung der Signale ergibt.

Im Weiteren ist es bevorzugt, dass die Elektronikeinheit dazu ausgelegt ist, zunächst den zweiten Bereich der Beladung und dann den ersten Bereich der Palette zu erfassen. Zum Beispiel werden die Lichtschranken für den zweiten Bereich zuerst gescannt und dann ein Scan der Lichtschranken für den ersten Bereich vorgenommen. Bei einem Scan werden die Lichtschranken vorzugsweise sequentiell abgefragt. Das hat den Vorteil, dass eine Situation vermieden werden kann, bei welcher bei sich bewegender Trägereinrichtung mit Beladung gerade keine Trägereinrichtung im ersten Bereich detektiertwurde, im nächsten Momentjedoch durch das Weiterbewegen die Beladung im zweiten Bereich von Lichtschranken erfasst und dann als Überhang interpretiert wird. Dies gilt für die Bestimmung einer Vorderflanke von Trägereinrichtung und Beladung. Für eine Hinterflanke von Trägereinrichtung und Beladung ist es bevorzugt, wenn zunächst der erste Bereich und dann der zweite Bereich gescannt wird.

Um eine Missinterpretation des jeweiligen Signals aus dem ersten und zweiten Bereich aufgrund einer Bewegung von Trägereinrichtung mit Beladung zu vermeiden, wird überdies vorgeschlagen, dass die Elektronikeinheit zum zumindest zweimaligen Erfassen des ersten und zweiten Bereichs ausgebildet ist. Ein zweiter "vollständiger Scan" kann als eine Art "Bestätigungsscan" aufgefasst werden, wonach ein entsprechendes Ausgangssignal für einen Überhang erzeugt wird, wenn sich das Überhangsignal des ersten Scans beim zweiten Scan bestätigt. Gegebenenfalls werden eine ganze Reihe von Scans durchgeführt.

Eine andere Möglichkeit Missinterpretationen zu vermeiden, kann darin bestehen, die Elektronikeinheit so zu gestalten, dass die Signale für den ersten und zweiten Bereich zueinander zeitversetzt werden. Beispielsweise wird bei einer Vorderflanke bzw. ankommenden Front das Signal des zweiten Bereichs nach vorne verschoben und für eine Hinterflanke bzw. abgehende Front das Signal des zweiten Bereichs in Bezug auf den ersten Bereich nach hinten versetzt. Dadurch kann sowohl an derVorder-als auch an der Rückflanke einer Trägereinrichtung ein gewisser Überhang entsprechend des Zeitversatzes zugelassen werden bzw. dadurch ein Überhang, der lediglich durch eine verzögerte Messung auftritt, ausgeschlossen werden.

Ein entsprechender Zeitversatz lässt sich auch dadurch erreichen, dass kein zeitliches Versetzen der Signale vorgenommen wird, sondern die Lichtschranken des ersten Bereichs zum zweiten Bereichs in Bezug auf eine Bewegungsrichtung der Trägereinrichtung geometrisch versetzt zueinander angeordnet sind.

### Zeichnungen

Mehrere Ausführungsbeispiele sind in den Zeichnungen unter Angabe weiterer Vorteile und Einzelheiten näher erläutert.

### Es zeigen

- Figur 1: eine Lichtschrankenvorrichtung mit einer sich darauf zu bewegenden beladenen Palette in einer schematischen Seitenansicht,
- Figur 2: ein zu Figur 1 entsprechendes Bild, jedoch mit einer unterschiedlich beladenen Palette, bei welcher die Beladung bereits in die Lichtschrankenvorrichtung hineinreicht,
- Figuren 3 und 4: einen Lichtschrankensignalverlauf für die . Lichtschrankenvorrichtungen gemäß der Figuren 1 und 2 füreinen vollständigen Durchlauf einer Palette mit Beladung, durch die Lichtschrankenvorrichtung
- Figuren 5 und 6: jeweils eine weitere Palette vor einer Lichtschrankenvorrichtung in einer schematischen Seitenansicht entsprechend der Figuren 1 und 2,
- Figur 7: die schematische Front-Darstellung Figur 5, mit einer nicht erfindungsgemäßen Lichtschrankenvorrichtung mit einer Schräg arbeitenden Lichtschranke,
- Figur 8: eine Palette mit Überhang der zwischen eine Lichtschrankenvorrichtung hineinreicht in einer schematischen Seitenansicht,
- Figur 9: eine schräg verlaufende Anordnung von Lichtschranken einer Lichtschrankenvorrichtung für die Detektion von vergleichsweise dünnen überstehenden Beladungselementen in einer schematischen Frontansicht Figur 8,
- Figuren 10 bis 13: Signalverläufe für Gruppen von Lichtschranken für den ersten und zweiten Bereich,
- Figuren 14 bis 16: in einer schematischen Seitenansicht geometrisch unterschiedlich ausgestaltete Seitenteile von Lichtschrankenvorrichtungen und
- Figur 17: in einer nicht erfindungsgemäßen chematischen Seitenansicht die Anordnung einer 3D-Kamera zur Überwachung einer Vorder- und Rückflanke einer beladenen Palette.

### Beschreibung der Ausführungsbeispiele

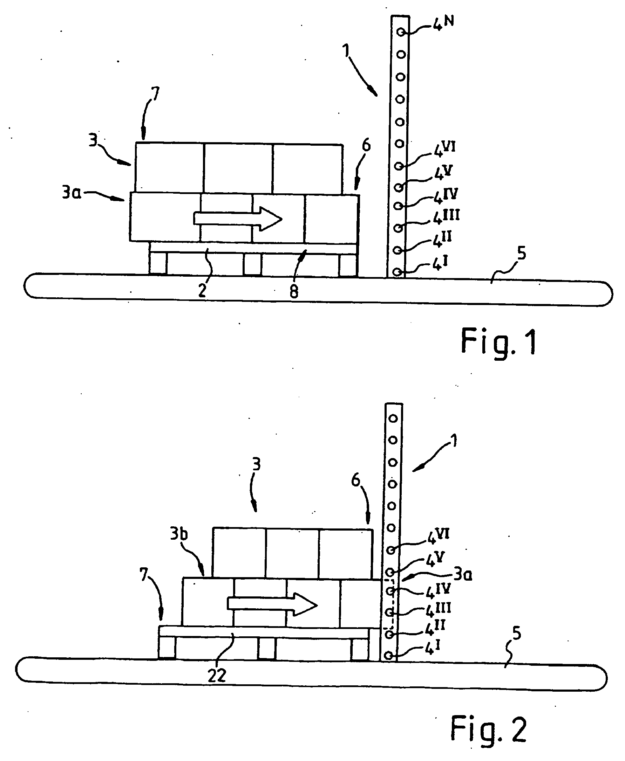

In Figur 1 ist eine Lichtschrankenvorrichtung 1 dargestellt, mit welcher ein Überhang 3a einer Ladung 3 auf einer Palette 2 detektiert werden kann. Die Palette 2 bewegt sich auf einer Fördereinrichtung 5 durch die Lichtschrankenvorrichtung 1 zum Beispiel zu einem Lagerplatz (nicht darstellt).

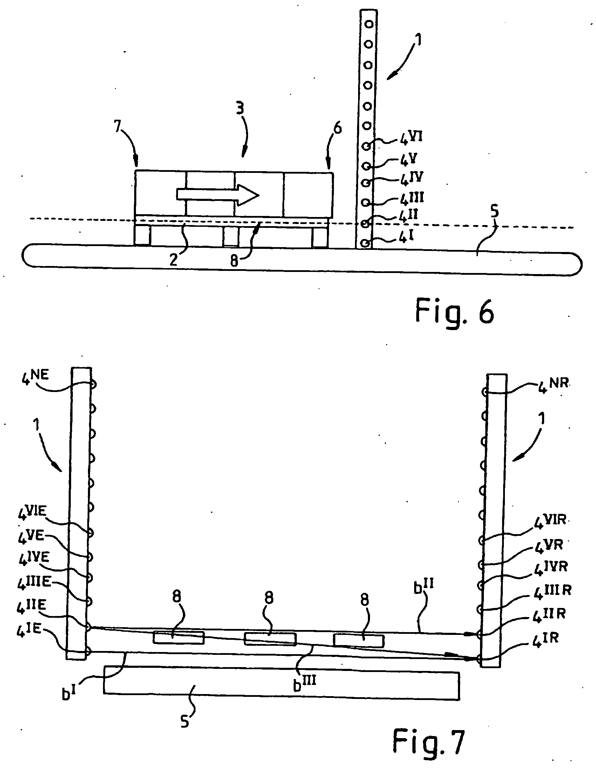

Der Lichtschrankenvorrichtung 1 besteht aus einer Vielzahl von Lichtschranken 4^{I} bis 4^{N}, die jeweils einen Sender 4^{IE}-4^{NE} sowie einen Empfänger 4^{IR}-4^{NR} (siehe insbesondere Figur 7) umfassen. Erfindungsgemäß sind die Lichtschranken 4^{I}-4^{N} der Lichtschrankenvorrichtung 1 in zwei Gruppen unterteilt. Eine erste Gruppe besteht aus solchen Lichtschranken 4^{I}, 4^{II}, die auf der gleichen Höhe wie die Palette 2 angeordnet sind. Die zweite Gruppe umfasst alle anderen Lichtschranken 4^{III}-4^{N} (siehe Figur 1). Ein Ausgang der Lichtschrankenvorrichtung wird aktiviert, wenn wenigstens eine Lichtschranke der zweiten Gruppe unterbrochen ist, während von der ersten Gruppe die Lichtschranken 4^{I}, 4^{II} nicht blockiert sind. Der aktivierte Ausgang steht somit für die Detektion eines Überhangs.

Läuft die Palette 2 in die Lichtschrankenvorrichtung 1, werden ohne dass die Palette stoppt, die Lichtschranken 4^{I}-4^{IV} unterbrochen. Da die Lichtschranken 4^{II} und 4^{IV} in der zweiten Gruppe zusammen mit den Lichtschranken 4^{I} und 4^{II} der ersten Gruppe unterbrochen werden, gibt die Lichtschrankenvorrichtung 1 zunächst kein Ausgangssignal, das die Detektion eines Überhangs signalisiert.

Vorzugsweise umfasst die Lichtschrankenvorrichtung auch Software, die es erlaubt, festzustellen, welche Lichtschranke unterbrochen ist. Durch ein Konfigurationsorgan, zum Beispiel einen PC, ein Notebook, ein PDA, eine Fernbedienung oder dergleichen (nicht dargestellt) lässt sich ermitteln, welche Lichtschranke zu welcher Lichtschrankengruppe gehört. Sobald der Ausgang der Lichtschrankenvorrichtung 1 aktiviert ist, steht ein Signal zur Verfügung, das zum Beispiel dafür eingesetzt werden kann, die Bewegung der Fördereinrichtung 5 und damit der Palette 2 anzuhalten. Dies ist beispielsweise der Fall, wenn eine Hinterkante 7 der Ladung 3 zur Lichtschrankenvorrichtung 1 gemäß Figur 1 gelangt. Dort sind über einen Bewegungsabschnitt die Lichtschranken 4^{III} bis 4^{VI} unterbrochen, während die Lichtschranken 4^{II}, 4^{I} für die Palette 2 nicht unterbrochen sind.

Erfindungsgemäß wird hierdurch der Ausgang aktiviert.

In Figur 2 ist eine zweite Palette 22 dargestellt, die sich auf der Fördereinrichtung 5 in Richtung der Lichtschrankenvorrichtung 1 bewegt. Die Palette 22 transportiert Boxen 3b durch die Lichtschrankenvorrichtung 1. Ohne die Palette 22 zu stoppen, werden die Lichtschranken 4^{III}, 4^{IV} der zweiten Gruppe unterbrochen. Da Lichtschranken von der ersten Gruppe nicht unterbrochen sind, wird der Ausgang der Lichtschrankenvorrichtung 1 aktiviert. Das Ausgangssignal kann dafür eingesetzt werden, die Bewegung der Palette 22 zu stoppen und/oder eine Bedienperson hinsichtlich eines Überhangs der Ladung 3 zu warnen.

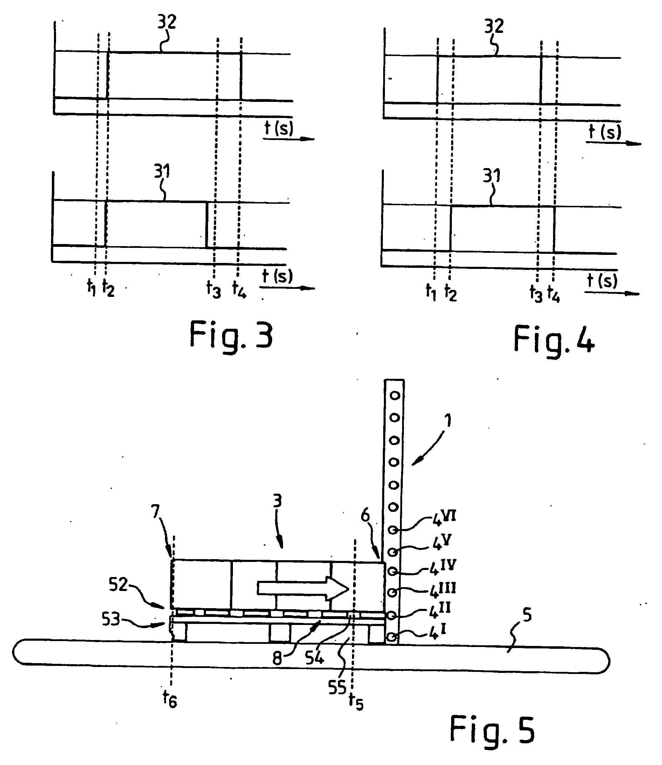

In Figur 3 ist ein Signalverlauf 31 für die erste Lichtschrankengruppe und ein Signalverlauf 32 für die zweite Lichtschrankengruppe dargestellt für einen Durchlauf einer Palette gemäß Figur 1 durch die Lichtschrankenvorrichtung 1. Die Signale stellen eine ODER-Verknüpfung von allen Lichtschranken der jeweiligen Gruppe dar.

Beit₁ sind beide Lichtschrankengruppen nicht unterbrochen. Daher wird kein Überhang detektiert. Bei t₂ werden beide Lichtschrankengruppen gleichzeitig unterbrochen, wodurch ebenfalls kein Überhang festgestellt wird. Bei t₃ ist die erste Lichtschrankengruppe nicht mehr unterbrochen, jedoch Lichtschranken 4^{III} und 4^{V} von der zweiten Gruppe. Dies wird als ein Überhang an der Hinterkante 7 (siehe Figur 1) interpretiert, was den Ausgang der Lichtschrankenvorrichtung 1 aktiviert.

In Figur 4 sind die Signalverläufe 31, 32 der ersten und zweiten Gruppe für den Fall dargestellt, dass die Palette 22 gemäß Figur 2 durch der Lichtschrankenvorrichtung 1 läuft.

Bei t₁ ist eine Lichtschranke der zweiten Gruppe unterbrochen, während keine Lichtschranke der ersten Gruppe unterbrochen ist, was einen Überhang an einer Vorderkante 6 der Ladung aufzeigt.

Bei t₄ ist nur die erste Gruppe unterbrochen, wodurch angezeigt ist, dass an der Hinterkante der Palette 22 kein Überhang vorhanden ist.

In der nachstehenden Tabelle wird der Status des Ausgangs der Lichtschrankenvorrichtung in Abhängigkeit vom Signal der ersten und zweiten Lichtschrankengruppe dargestellt.

| Lichtschrankengruppe 1 | Lichtschrankengruppe 2 | Ausgang |
|---|---|---|
| 1 | 1 | 0 |
| 1 | 0 | 0 |
| 0 | 1 | 1 |
| 0 | 0 | 0 |

Das Grundprinzip ist vergleichsweise einfach, in der Realität können jedoch Spezialfälle auftreten, sowie in Figur 5 gezeigt.

In Figur 5 ist eine Palette 52 dargestellt, die an der Hinterkante 53 beschädigt ist sowie ein zurückgesetztes Profil aufweist. Außerdem sind im Verlauf der Palette 52 Luken 54, 55 vorhanden.

Das hat zur Folge, dass an der Stelle t₅ die zweite Lichtschrankengruppe unterbrochen ist, während die erste Lichtschrankengruppe nicht unterbrochen ist, wodurch gemäß der oben stehenden Tabelle der Ausgang aktiviert wird. Denn die Luken 54, 55 erlauben den Lichtschranken 4^{I} sowie 4^{II} durch die Palette 52 hindurchzuschauen.

Es gibt mehrere Möglichkeiten, einen hierdurch erzeugten ungewollten Stopp der Palette 52 zu verhindern.

In einer ersten Ausführungsform wird sichergestellt, dass wenigstens eine Lichtschranke 4^{II} auf exakt der gleichen Höhe eines Teils 8 der Palette 52 angeordnet ist, welches sich vom Anfang bis zum Ende der Palette 52 erstreckt. Diese Situation ist in Figur 6 dargestellt

In Figur 7 ist in der schematischen Frontansicht ein schräg verlaufender Lichtstrahl für die erste Lichtschrankengruppe dargestellt, Die Figur zeigt die Situation in Figur 5 bei der Zeit t₅, wobei in der Schnittansicht der Palette 52 lediglich Teile 8 abgebildet sind. Drei Stahlen der Lichtschranken sind aufgezeigt (b^{I}, b^{II}, b^{III}). Die gerade bzw. horizontal verlaufenden Strahlen b^{I}, b^{II} gehen an den Teilen 8 vorbei, wohingegen der schräge Stahl b^{III} auf die Teile 8 trifft und unterbrochen wird. Ein entsprechender Detektionsvorgang lässt sich beispielsweise über ein Konfigurationsorgan aktivieren.

In einer dritten Lösung werden die Signale der beiden Uchtschrankengruppen aufgezeichnet und später verarbeitet. Dies ist regelmäßig ohne Probleme möglich, da es normalerweise nicht darauf ankommt, dass eine Palette unmittelbar nach Durchlaufen der Liehtschrankenvorrichtung 1 gestoppt wird. Ein Abstand von mehreren Zentimetern bis hin zu mehreren Metern ist häufig problemlos möglich.

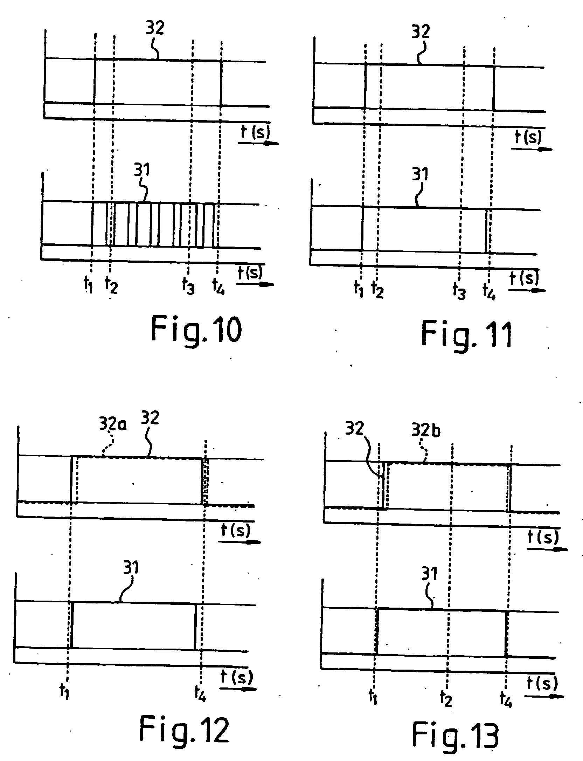

Die Verarbeitung der aufgenommenen Signale von Figur 5 wird anhand der Figuren 10 und 11 erläutert.

Die Signale in Figur 10 zeigen an sich keinen Überhang der groß genug wäre, dass bei t₁ oder t₄ ein entsprechender Ausgang der Lichtschrankenvorrichtung 1 aktiviert werden müsste. Der Bereich bei t₂ allerdings führt zur Aktivierung des Ausgangs. Wenn die Signalverläufe bekannt sind, kann ein Algorithmus die Vorder- und Hinterkante der Palette und der Ladung leicht bestimmen. Die Vorderkante bei t₁ zeigt klar das kein Überhang vorhanden ist. Die Hinterkante bei t₄ weist zwar einen kleinen Zeitunterschied auf, jedoch verglichen mit einer maximal zulässigen Zeitdifferenz sollte sich zeigen, dass hier auch nicht das Problem eines Überhangs besteht Alles was zwischen Vorderkante 6 und der Hinterkante 7 passiert, ist an sich nicht relevant für die Bestimmung eines Überhangs und kann daher ignoriert werden. Im Ergebnis kann das Signal 31 der ersten Lichtschrankengruppe und das Signal 32 der zweiten Lichtschrankengruppe so wie in Figur 11 aufgefasst und entsprechend ausgewertet werden.

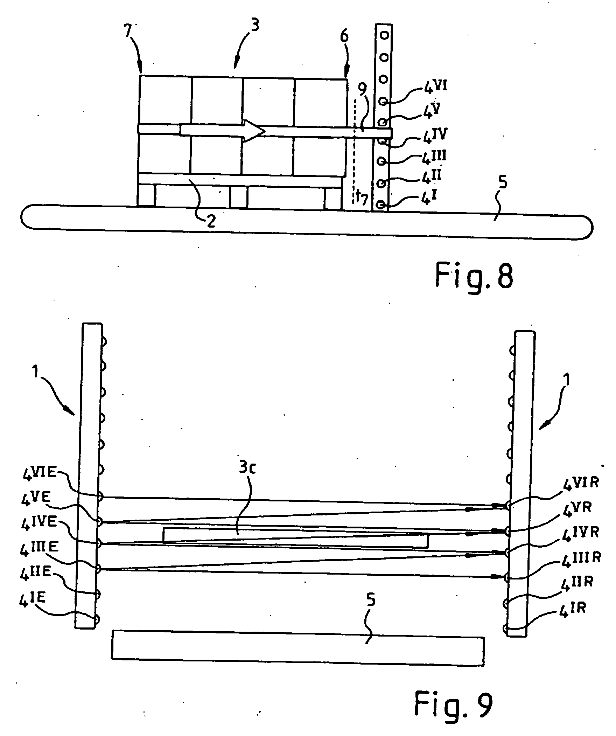

In Figur 8 ist eine weitere Situation dargestellt, die Probleme bereiten kann. In diesem 8 eispiel ist ein Gegenstand 9 der Ladung dünn genug, so dass er von den parallelen Lichtschranken (siehe auch Figur 9) nicht erfasst wird. Entsprechend wie in Figur 7 dargestellt für die erste Lichtschrankengruppe, kommt ein schräger lichtschrankenmodus für die zweite Lichtschrankengruppe zur Anwendung. Der schräge Lichtschrankenmodus führt zu einer höheren Auflösung innerhalb der festgelegten Lichtschrankengruppe und zu einer größeren Zuverlässigkeit bei der Detektion von Ladungsgegenständen 3c so wie in Figur 9 dargestellt.

Zu beachten ist, dass ein schräger Lichtstrahl nicht von der ersten zur zweiten Lichtschrankengruppe verlaufen sollte, da dann keine Unterscheidung mehr zwischen der Ladung 3 und der Palette 2 möglich ist. Zu beachten ist weiter, dass nicht alle Lichtschranken normalerweise gleichzeitig ausgelesen werden. Theoretisch kann das bedeuten, dass die Lichtschranken der ersten Gruppe ausgelesen sind, jedoch bis zum Auslesen der Lichtschranken der zweiten Gruppe sich die Palette ein kleines bisschen weiterbewegt hat. Dadurch können beispielsweise die Lichtschranken der ersten Gruppe keine Unterbrechung detektieren, wogegen die Lichtschranken der zweiten Gruppe nun in der Ladung stehen und unterbrochen sind, obwohl an sich kein Überhang besteht.

Um solche Situationen zu vermeiden gibt es wiederum mehrere mögliche Ausführungsformen.

Eine erste Möglichkeit besteht darin, eine bestimmte Lichtschrankengruppe immer zuerst durchzuscannen. Für die Vorderkante der Palette kann zum Beispiel immer zuerst die zweite Lichtschrankengruppe ausgelesen werden. Das stellt sicher, dass unter der Voraussetzung das kein Überhang vorhanden ist, niemals die Ladung detektiert wird, aber die Palette nicht. Entsprechend sollte für die Hinterkante zunächst die erste Lichtschrankengruppe ausgelesen werden.

Bei einer zweiten Möglichkeit werden die Lichtschranken nochmals komplett ausgelesen, bevor ein Ausgangsignal aktiviert wird. Beispielsweise werden die Lichtschranken zweimal ausgelesen und dann der zweite "Scan" daraufhin überprüft, ob er mit dem ersten "Scan" der Lichtschranken übereinstimmt Erst dann wird der Ausgang aktiviert oder nicht aktiviert.

Viele Faktoren (z. B. Geschwindigkeit der Palette, Auslesegeschwindigkeit, Position der Lichtschranken) bestimmen, ob ein Überhang zuverlässig detektiert wird oder nicht.

Bei einem weiteren Ausführungsbeispiel werden die Lichtschranken mehrfach ausgelesen. Die Anzahl von aufeinanderfolgenden Auslesezyklen, die das gleiche Ergebnis zeigen müssen, bevor der Ausgang aktiviert wird, lässt sich beispielsweise über das Konfigurationsorgan einstellen.

Ein Nebeneffekt dieser Ausgestaltung ist die Vergrößerung des kleinsten detektierbaren Überhangs. In vielen Fällen kann allerdings ein kleiner Überhang akzeptiert werden.

Es gibt verschiedene Möglichkeiten das System auszugestalten, einen vorgegebenen Überhang bestimmter Größe noch nicht als solchen zu delektieren, jedoch einen darüber hinausgehenden Überhang nicht mehr zu erlauben.

In der Situation, die in Figur 12 dargestellt ist, wird der Ausgang aufgrund des Vorhandenseins eines Überhangs bei t₁ aktiviert. Da die erste Lichtschrankengruppe kein Unterbrechungssignal 31 liefert, aber die zweite Lichtschrankengruppe einen Signalverlauf 32 aufweist, der die Detektion einer Ladung, und damit einen Überhang wiederspiegelt.

In vielen Fällen kann jedoch gerade dieser minimale Überhang, der sich aus der vergleichsweisen kleinen Zeitdifferenz von t₁ in Figur 12 bis zur ansteigenden Flanke des Signals 31 ergibt, durchaus toleriert werden.

Bei einer vorteilhaften Ausgestaltung der Erfindung wird das Signal 32 zeitversetzt, so dass sich der gepunktete Signalverlauf 32a ergibt. An der Vorderkante wird hierdurch das Problem klar gelöst. Allerdings an der Hinterkante ergibt sich dadurch ein nicht vorhandener Überhang, weil bei t₄ das Ausgangssignal aktiviert wird. Um dieses Problem zu vermeiden, kann man den Zeitversatz nur für eine vorgegebene Zeit z. B. bis t₂ (siehe Figur 13) stattfinden lassen. Nach der Zeit t₂ kann das Signal der zweiten Lichtschrankengruppe gerade in die andere Richtung zeitversetzt werden, wodurch sich dergepunktete Signalverlauf 32b in Figur 13 ergibt. Die Stelle t₂ kann beisplelswelse willkürlich ausgewählt werden und zwischen der Vorder- und Hinterkante liegen.

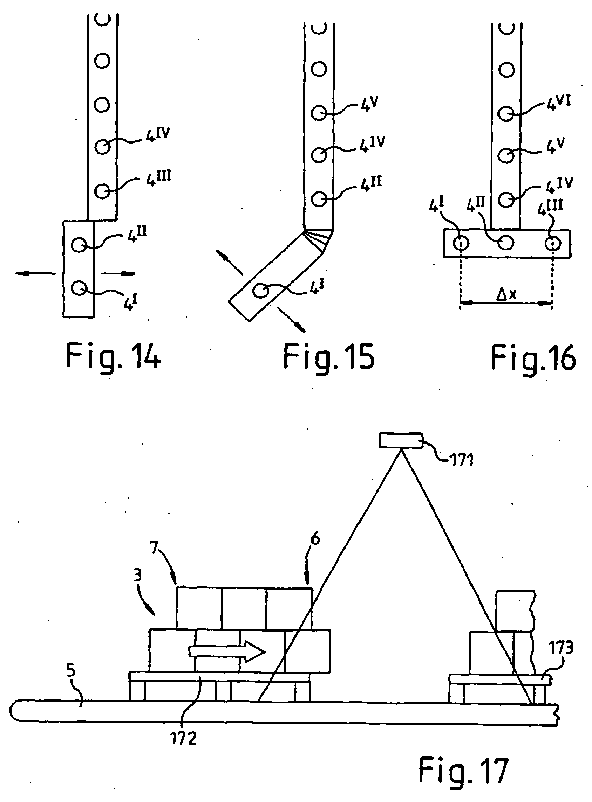

Eine andere Möglichkeit einen Zeitversatz zu erzeugen, besteht darin, wenigstens eine Lichtschranke aus einer Lichtschrankengruppe geometrisch zu versetzen. Drei mögliche Ausführungsvarfanten sind in den Figuren 14 bis 16 dargestellt in Figur 14 sind die Lichtschranken 4^{I} und 4^{II} gegen die Richtung der Bewegung einer Palette versetzt. Dadurch werden die Signale der Lichtschranken 4^{I} und 4^{II} zu den übrigen Lichtschranken zeitversetzt. Da der Versatz mehr oder weniger dem tolerierbaren Überhang entspricht, ist eine solche Realisierung vergleichsweise einfach anzuwenden. Figur 15 zeigt eine entsprechende Lösung, jedoch lediglich mit dem Versatz einer Lichtschranke 4^{I}.

Da der Versatz eine Zeitverschiebung in einer Richtung erzeugt, kann dies zu Problemen an einer Hinterkante einer Palette mit Beladung führen. Denn selbst wenn kein Überhang vorhanden ist, kann der durch die geometrische Versetzung erzeugte Zeitversatz den "Überhang vorhanden - Ausgang" aktivieren.

Dies kann dadurch verhindert werben, wenn berücksichtigt wird, ob die Lichtschrankenvorrichtung eine Vor derkante 6 oder eine Hinterkante 7 detektiert. In Figur 16 ist eine Ausgestaltung dargestellt, die als weiterentwickelte Version zwischen einer Vorderkante 6 und eine Hinterkante 7 unterscheiden kann. Die Lichtschranke 4^{I} kümmert sich um die Vorderseite, wohingegen die Lichtschranke 4^{III} für die Hinterseite eingesetzt wird. Aus der Zeitdifferenz der Signale der Lichtschranken 4^{I} und 4^{III} und ihrer Distanz Δx kann darüber hinaus die Geschwindigkeit einer Palette bestimmt werden. Auf diese Weise kann auch die Größe eines Überhangs berechnet und mit vorgegebenen Werten eines Konflguratlonsorgans verglichen werden. Die Lichtschranke 4^{II} in Figur 16 kann eingesetzt werden, um festzustellen, ob die Lichtschrankenvorrichtung die Vorder oder Hinerkante eines Objekts überwacht Sind die Lichtschranken 4^{I} und 4^{II} blockiert und die Lichtschranke 4^{III} ist nicht blockiert, handelt es sich um die Detektion der Vorderkante. Sind hingegen die Lichtschranken 4^{III} und 4^{II} blockiert und 4^{I} ist nicht blockiert, so muss eine Hinterkante vorliegen.

Bei einer weiteren bevorzugten Ausgestaltung der Erfindung umfasst das Detektionssystem einen weiteren Ausgang für die Höhe der Ladung. Die Höhe kann kontinuierlich ausgegeben werden, wenn eine Lichtschranke unterbrochen ist, auf Anforderung oder nur wenn kein Überhang erfasst ist.

In Figur 17 ist eine nicht erfindungsgemäße weitere Ausgestaltung dargestellt. Hier wird eine 3D-Kamera eingesetzt, um die Ladung zu überprüfen, wie in Figur 17 dargestellt z. B. die Vorderkante der Ladung einer ersten Palette 172 und die Hinterkante der Ladung einer zweiten Palette 173.

Die Kamera kann z. B. als Stereokamera ausgebildet sein, Laufzeitmessungen vornehmen oder auf dem Time of Flight-Prinzip" basieren, bei welchem auf eine elektromagnetische Strahlung z. B. ein Lichtsignal eine Schwingung aufmoduliert wird, wobei das ausgesandte Signal mit einem zurückkommenden Signal verglichen wird und aus der Phasendifferenz der aufmodulierten Schwingung der Abstand zu der Reflektionsfläche ermittelbar ist.

Ein Vorteil einer solchen Ausgestaltung liegt in der Möglichkeit den ersten und zweiten Bereich gleichzeitig zu prüfen. Zusätzlich können die Signale dazu verwendet werden, Parameter der Palette und Ladung, beispielsweise die Höhe, die Breite und das Volumen zu bestimmen.

## Patentansprüche

1. Sensorvorrichtung (1) zur Detektion eines Überhangs an der Beladung (3) einer Trägereinrichtung (2, 22, 52), umfassend
eine Sensoranordnung (1) mit wenigstens einem Sender und einem Empfänger sowie einer Elektronikeinheit zur Steuerung von Sender und Empfänger,
wobei die Sensoranordnung (1) zwei Bereiche der Trägereinrichtung (2) mit Beladung. (3) während einer Bewegung der Trägereinrichtung derart erfasst, dass eine Bewertung der geometrischen Position der Bereiche zueinander ermöglicht ist,
wobei der erste Bereich die Trägereinrichtung (2) und der zweite Bereich die Beladung (3) betrifft, und
wobei die Elektronikeinheit dazu ausgelegt ist, für jeden Bereich ein Signal zu erzeugen und die Signale (31, 32) zu verknüpfen, so dass daraus auf einen Überhang geschlossen werden kann,
wobei die Sensoranordnung (1) eine Lichtschrankenanordnung mit mehreren Lichtschranken (4^{I} bis 4^{N}) umfasst, wobei die Lichtschranken dem ersten und zweiten Bereich zugeordnet sind, so dass wenigstens eine Lichtschranke im ersten Bereich für die Detektion einer Trägereinrichtung (2) und wenigstens eine Lichtschranke im zweiten Bereich für die Detektion einer Beladung (3) vorgesehen ist, und
wobei ein Detektionsstrahl der wenigstens einen Lichtschranke im zweiten Bereich parallel oder schräg zu einem Detektionsstrahl der wenigstens einen Lichtschranke im ersten Bereich, sowie schräg zu einer Ebene einer Trägereinrichtungsauflage verläuft, wobei eine schräge Anordnung von Lichtschranken jeweils nur in einem der Bereiche und nicht zwischen den Bereichen vorgenommen wird.

2. Vorrichtung nach Anspruch 1, **dadurch gekennzeichnet, dass** die Elektronikeinheit dazu ausgelegt ist, für jeden Bereich ein einziges Signal (31, 32) zu erzeugen und auf einen Überhang durch eine logische Verknüpfung zu schließen, wenn für den ersten Bereich ein Signal (31) generiert ist, das keine Trägereinrichtung widerspiegelt und für den zweiten Bereich ein Signal (32) generiert ist, das eine Beladung widerspiegelt.

3. Vorrichtung nach einem der vorhergehenden Ansprüche, **dadurch gekennzeichnet, dass** wenigstens eine Lichtschranke (4") auf einer Höhe der Trägereinrichtung (2) angeordnet ist, in welcher sich eine Deckschicht (8) für die Bereitstellung einer Trägereinrichtungsauflage befindet.

4. Vorrichtung nach einem der vorhergehenden Ansprüche, **dadurch gekennzeichnet, dass** in wenigstens einem ersten oder zweiten Bereich zumindest eine Lichtschranke vorgesehen ist, die in Bezug auf eine Ebene einer Trägereinrichtungsauflage schräg verläuft.

5. Vorrichtung nach einem der vorhergehenden Ansprüche, **dadurch gekennzeichnet, dass** mittels der Elektronikeinheit aus einer Zeitdifferenz zwischen einem Signal (31) des ersten Bereichs und ein Signal (32) des zweiten Bereichs unter Hinzuziehung einer Bewegungsgeschwindigkeit der Trägereinrichtung (2) das Vorhanden oder das Nichtvorhandensein eines Überhangs ermittelbar ist.

6. Vorrichtung nach einem der vorhergehenden Ansprüche, **dadurch gekennzeichnet, dass** die Elektronikeinheit dazu ausgelegt ist, zunächst den zweiten Bereich der Beladung (3) und dann den ersten Bereich der Trägereinrichtung (2) zu erfassen.

7. Vorrichtung nach einem der vorhergehenden Ansprüche, **dadurch gekennzeichnet, dass** die Elektronikeinheit zum zumindest zweimaligen Auslesen des ersten Bereichs der Beladung (3) und des zweiten Bereichs der Trägereinrichtung ausgebildet ist.

8. Vorrichtung nach einem der vorhergehenden Ansprüche, **dadurch gekennzeichnet, dass** die Elektronikeinheit ausgelegt ist, die Signale (31, 32) für den ersten und zweiten Bereich zueinander Zeit zu versetzen.

9. Vorrichtung nach einem der vorhergehenden Ansprüche, **dadurch gekennzeichnet, dass** die Zeitversetzung in Abhängigkeit davon erfolgt, ob eine ankommende Front oder eine abgehende Front einer in Bewegung sich befindenden Trägereinrichtung mit Beladung detektiert wird.

10. Vorrichtung nach einem der vorhergehenden Ansprüche, **dadurch gekennzeichnet, dass** wenigstens eine Lichtschranke für den ersten Bereich zu wenigstens einer Lichtschranke für den zweiten Bereich in Bezug auf eine Bewegungsrichtung der Trägereinrichtung geometrisch versetzt angeordnet ist.

## Claims

1. Sensor apparatus (1) for detecting an overhang on the load (3) of a carrier device (2, 22, 52), comprising
a sensor arrangement (1) with at least one transmitter and one receiver,
and an electronic unit for controlling the transmitter and receiver,
wherein the sensor arrangement (1) senses two regions of the carrier device (2) with a load (3) during a movement of the carrier device such that evaluation of the geometrical position of the regions in relation to one another is made possible,
wherein the first region relates to the carrier device (2) and
the second region relates to the load (3), and
the electronic unit is designed for generating a signal for each region and linking the signals (31, 32) such that it is possible to ascertain an overhang from this,
wherein the sensor arrangement (1) comprises a light barrier arrangement with a number of light barriers (4^{I} to 4^{N}), wherein the light barriers are assigned to the first and second regions so that at least one light barrier in the first region is provided for detection of the carrier device (2) and at least one light barrier in the second region is provided for detection of the load (3), and
wherein a detection beam of the at least one light barrier in the second region is parallel or runs oblique to a detection beam of the at least one light barrier in the first region, and runs oblique to a plane of a carrier device support, wherein an oblique arrangement of light barriers is respectively only provided in one of the regions and not between the regions.

2. Apparatus according to claim 1, **characterized in that** the electronic unit is designed to generate a single signal (31, 32) for each region and ascertains an overhang by performing a logical linking operation if a signal (31) that does not signify a carrier device is generated for the first region and a signal (32) that signifies a load is generated for the second region.

3. Apparatus according to one of the preceding claims, **characterized in that** at least one light barrier (4^{II}) is arranged at a height of the carrier device (2) at which there is a deck layer (8) for the provision of the carrier device support.

4. Apparatus according to one of the preceding claims, **characterized in that** at least one light barrier that runs obliquely with respect to a plane of a carrier device support is provided in at least a first or second region.

5. Apparatus according to one of the preceding claims, **characterized in that** the presence or absence of an overhang can be determined by means of the electronic unit from a time difference between a signal (31) of the first region and a signal (32) of the second region, by using a speed of movement of the carrier device (2).

6. Apparatus according to one of the preceding claims, **characterized in that** the electronic unit is designed for first sensing the second region of the load (3) and then the first region of the carrier device (2).

7. Apparatus according to one of the preceding claims, **characterized in that** the electronic unit is formed for reading the first region of the load (3) and the second region of the carrier device at least twice.

8. Apparatus according to one of the preceding claims, **characterized in that** the electronic unit is designed in such a way that the signals (31, 32) for the first and second regions are shifted in time in relation to one another.

9. Apparatus according to one of the preceding claims, **characterized in that** the time shift takes place in dependence on whether an arriving front or departing front of a moving carrier device with a load is being detected.

10. Apparatus according to one of the preceding claims, **characterized in that** at least one light barrier for the first region is arranged geometrically offset in relation to at least one light barrier for the second region with respect to a direction of movement of the carrier device.

## Revendications

1. Dispositif de capteur (1) pour la détection d'un surplomb sur le chargement (3) d'un dispositif de support (2, 22, 52), comprenant un agencement de capteur (1) avec au moins un émetteur et un récepteur ainsi qu'une unité électronique pour commander l'émetteur et le récepteur,
dans lequel l'agencement de capteur (1) détecte deux régions du dispositif de support (2) avec le chargement (3) pendant un déplacement du dispositif de support, de telle sorte qu'une analyse de la position géométrique des régions l'une par rapport à l'autre soit possible,
la première région concernant le dispositif de support (2) et la deuxième région le chargement (3), et
dans lequel l'unité électronique est conçue de manière à produire pour chaque région un signal et à corréler les signaux (31, 32) de telle sorte que l'on puisse en conclure un surplomb,
dans lequel l'agencement de capteur (1) comprend un agencement de barrière lumineuse avec plusieurs barrières lumineuses (4^{I} à 4^{N}), les barrières lumineuses étant associées à la première et à la deuxième région, de sorte qu'au moins une barrière lumineuse dans la première région soit prévue pour la détection d'un dispositif de support (2) et dans lequel au moins une barrière lumineuse dans la deuxième région soit prévue pour la détection d'un chargement (3), et
dans lequel un faisceau de détection de la barrière lumineuse dans la deuxième région s'étend en parallèle ou en biais par rapport à un faisceau de détection de la barrière lumineuse dans la première région, et s'étend en biais par rapport à un plan d'un recouvrement du dispositif de support, dans lequel l'arrangement en biais et fait seulement dans une des régions et pas entre les régions.

2. Dispositif selon la revendication 1, **caractérisé en ce que** l'unité électronique est conçue de manière à produire pour chaque région un signal unique (31, 32) et à en conclure un surplomb par corrélation logique, lorsque pour la première région, un signal (31) est produit, lequel ne reproduit pas le dispositif de support, et que pour la deuxième région, un signal (32) est produit, lequel reproduit un chargement.

3. Dispositif selon l'une quelconque des revendications précédentes, **caractérisé en ce qu'**au moins une barrière lumineuse (4") est disposée à une hauteur du dispositif de support (2) à laquelle se trouve une couche de recouvrement (8) pour fournir un recouvrement du dispositif de support.

4. Dispositif selon l'une quelconque des revendications précédentes, **caractérisé en ce que** dans au moins une première ou deuxième région, on prévoit au moins une barrière lumineuse, qui s'étend en biais par rapport à un plan d'un recouvrement du dispositif de support.

5. Dispositif selon l'une quelconque des revendications précédentes, **caractérisé en ce qu'**au moyen de l'unité électronique, on peut déterminer à partir d'une différence de temps entre un signal (31) de la première région et un signal (32) de la deuxième région, en ajoutant une vitesse de déplacement du dispositif de support (2), la présence ou l'absence d'un surplomb.

6. Dispositif selon l'une quelconque des revendications précédentes, **caractérisé en ce que** l'unité électronique est conçue pour détecter d'abord la deuxième région du chargement (3) puis la première région du dispositif de support (2).

7. Dispositif selon l'une quelconque des revendications précédentes, **caractérisé en ce que** l'unité électronique est conçue pour au moins lire deux fois la première région du chargement (3) et la deuxième région du dispositif de support.

8. Dispositif selon l'une quelconque des revendications précédentes, **caractérisé en ce que** l'unité électronique est conçue pour décaler dans le temps les signaux (31, 32) les uns par rapport aux autres pour la première et la deuxième région.

9. Dispositif selon l'une quelconque des revendications précédentes, **caractérisé en ce que** le décalage dans le temps s'effectue en fonction de la détection, ou non, d'un front arrivant ou d'un front partant d'un dispositif de support en mouvement avec son chargement.

10. Dispositif selon l'une quelconque des revendications précédentes, **caractérisé en ce qu'**au moins une barrière lumineuse pour la première région est disposée de manière géométriquement décalée par rapport à au moins une barrière lumineuse pour la deuxième région, par rapport à une direction de déplacement du dispositif de support.
